# EUROPEAN PATENT SPECIFICATION

(11) **EP 2 431 210 B1**
(45) Date of publication and mention of the grant of the patent: **16.01.2013**
(21) Application number: 10425303.4
(22) Date of filing: 17.09.2010
(51) Int. Cl.: B60K 37/06, B60R 11/02

(54) **Automotive human machine interface**
Mensch-Maschinen-Schnittstelle für Fahrzeuge
Interface homme-machine pour automobile

(43) Date of publication of application: 21.03.2012
(73) Proprietor: C.R.F. Società Consortile per Azioni, 10043 Orbassano (Torino) (IT)
(72) Inventor: Quattrocolo, Silvia c/o C.R.F. Società Consortile per Azioni, 10043 Orbassano (Torino) (IT); Storgato, Angelo c/o C.R.F. Società Consortile per Azioni, 10043 Orbassano (Torino) (IT); Deregibus, Enrica c/o C.R.F. Società Consortile per Azioni, 10043 Orbassano (Torino) (IT); Iviglia, Alessandro c/o C.R.F. Società Consortile per Azioni, 10043 Orbassano (Torino) (IT)
(74) Representative: Bergadano, Mirko

(56) References cited:
- EP-A2- 1 529 678
- EP-A2- 2 103 476
- DE-A1-102005 001 963
- US-A1- 2005 280 524
- US-A1- 2007 057 927

## Description

### TECHNICAL FIELD OF THE INVENTION

The present invention relates to an automotive human machine interface (HMI), which finds advantageous, albeit non-exclusive, application on road motor vehicles designed to transport persons or goods, but that could also be used in other types of vehicles, for example agricultural machinery, earth-moving machinery, etc.

As regards its application on motor vehicles, the automotive human machine interface is particularly suitable for motor vehicles provided with a driving compartment for the driver and possible passengers when the vehicle is in motion, such as for example the passenger compartment of a motor vehicle for transporting persons, the front area of the driving cab of an industrial motor vehicle (lorry, truck and full trailer, articulated vehicle, etc.) or commercial motor vehicle (van, vehicles converted into vans, chassis cabs, etc.), and a lodging or accommodation compartment, which is arranged or can be used for resting, living or other activities, both when the vehicle is in motion and when it is standing still, such as the rear area of the driving cab of an industrial or commercial motor vehicle to be used as resting area, the living space of a camper or of a caravan, the passenger area of a bus, the loading space of a light commercial motor vehicle, etc.

### STATE OF THE ART

As is known, the design of the functions of automotive infotelematic systems is increasingly aimed at solutions characterized by a high interactivity between driver, passengers, motor vehicle, and outside world.

In particular, there is a continuous increase in the control that the driver and the passengers can perform on the functions of motor vehicles, such as for example control of the stereo system, of the air-conditioning system, etc., and on the interaction of the motor vehicles with the outside world, such as for example handling telephone calls made with a personal cellphone and the interference between the latter and the activity of listening to music, handling information coming from the on-board computer, interaction with the navigator, etc.

US 2007/057927 A1 describes an automotive human machine interface comprising a control console with a display unit, a support to which the control console can be removably fixed, and an electronic managing unit configured to manage operation of the control console and to cause user-selectable functions to be displayed on the control console.

There is consequently increasingly felt the need to equip automotive infotelematic systems with human machine interfaces that make interaction between the user and the motor vehicle as simple, intuitive, and immediate as possible so as to limit distraction of the driver from the task of driving, and that possess safety requirements to prevent their use from possibly jeopardizing the safety of the occupants themselves of the motor vehicle and of the other motor vehicles when the vehicle is in motion.

### OBJECT AND SUMMARY OF THE INVENTION

Aim of the present invention is to provide an automotive human machine interface that will meet the needs referred to above.

According to the present invention, an automotive human machine interface and a motor vehicle equipped with said automotive human machine interface are provided, as claimed in the appended claims.

### BRIEF DESCRIPTION OF THE DRAWINGS

- Figures 1, 2, and 3 show a passenger compartment of an industrial motor vehicle provided with an automotive human machine interface according to the present invention; and
- Figures 4-9 show various menus displayed on the automotive human machine interface shown in Figures 1-3.

### DETAILED DESCRIPTION OF PREFERRED EMBODIMENTS OF THE INVENTION

The present invention will now be described in detail with reference to the attached figures to enable a person skilled in the branch to implement and use it. Various modifications to the embodiments described will be immediately evident to persons skilled in the branch, and the generic principles described can be applied to other embodiments and applications, without thereby departing from the sphere of protection of the present invention, as defined in the annexed claims. Consequently, the present invention is not to be considered as being limited to the embodiments described and illustrated herein, but it must be granted the widest possible sphere of protection in conformance with the principles and characteristics described and claimed herein.

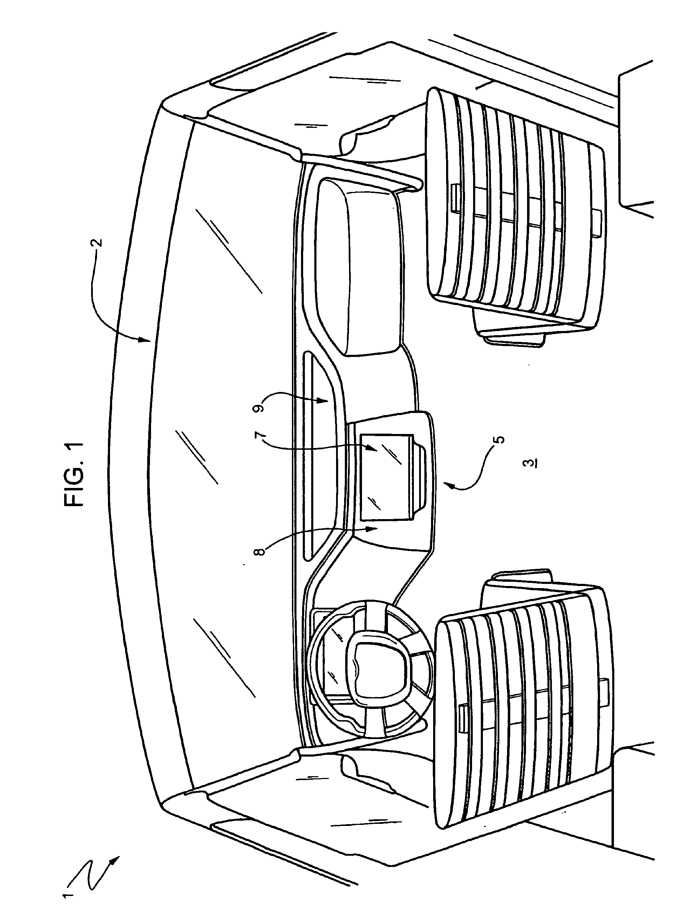

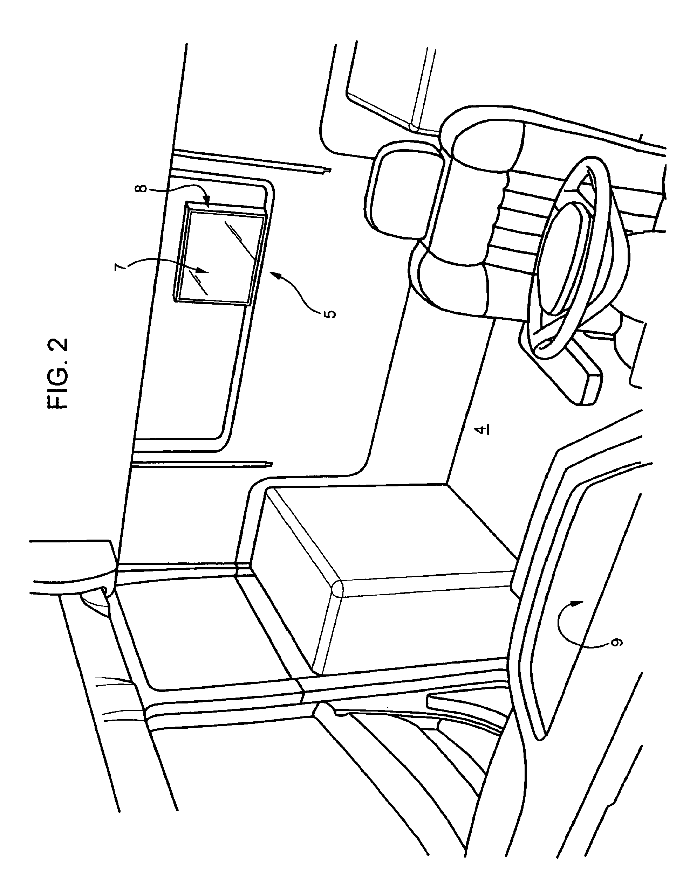

Figures 1, 2, and 3 show partially a motor vehicle, referenced as a whole by 1, provided with a passenger compartment 2, in the example shown an industrial motor vehicle provided with a driving cab, comprising a driving compartment 3 (Figure 1) for housing the driver and a passenger when the motor vehicle 1 is in motion or also during a brief stop thereof, and a lodging or accommodation compartment 4 (Figure 2) distinct from the driving compartment and designed as living area for the driver and possibly also for a passenger during a prolonged stop of the motor vehicle 1, for example for rest, work, or amusement.

The motor vehicle 1 is further provided with an infotelematic or infotainment system (not shown) comprising an automotive human machine interface 5 configured to control operation of the infotelematic or infotainment system and of the motor vehicle 1 in general, in particular of on-board electrical/electronic devices of various kinds (not shown), such as electrical actuators operable to regulate windows and adjusting seats, lights, window regulators, windscreen wipers, headlight wipers, air-conditioning system, Hi-Fi system, satellite navigation system, telephone communication system operable to receive and send telephone calls via a personal cellphone, electronic mail system, etc.

The infotelematic or infotainment system further comprises an electronic control unit (not shown), conveniently microprocessor-based, which is operable to communicate with the automotive human machine interface 5 and with a controller area network (CAN) (not shown) of the motor vehicle 1, through which the electronic control unit may receive information on state and operation of the motor vehicle 1.

The automotive human machine interface 5 basically comprises a portable control console 7 comprising a touch-sensitive control display unit, which is removably attacheable to any one of a plurality of supports 8 provided inside the passenger compartment 2 of the motor vehicle 1. For example, the supports 8 can be provided in the form of frames defining respective housings for the control console 7. The supports 8 are appropriately configured, in a way known per se and hence not described in detail, to enable the support 8 to which the control console 7 is fixed to be recognized and the control console 7 to be electrically supplied when fixed to the supports 8.

For this purpose, each support 8 is provided with a series of electrical contacts (not shown) designed to co-operate with matching electrical contacts carried by the control console 7. In each support 8, some of the electrical contacts are connected to an external electrical power source (not shown), for example, the battery of the motor vehicle 1, whilst the others are designed to allow the support 8 to be uniquely identified and hence recognized. Furthermore, in order to releasably withhold the control console 7, each support 8 is equipped with an appropriate fixing mechanism, for example of the snap-action, interference-fit, or magnetic type, or any other known mechanism suitable for this purpose, configured to co-operate with a matching fixing mechanism carried by the control console 7.

As illustrated by way of example in Figure 1, a first support 8 for the control console 7 is provided in the driving compartment 3 of the passenger compartment 2 of the motor vehicle 1, and in particular in the dashboard 9 of the motor vehicle 1, in a central position between the driving seat and the passenger seat, whilst, as illustrated by way of example in Figure 2, a second support 8 for the control console 7 is provided in the lodging or accommodation compartment 4 of the passenger compartment 2, and in particular on the wall facing the windscreen of the motor vehicle 1. Further supports 8 for the control console 7 could then be provided in other areas of the passenger compartment 2 of the motor vehicle 1, and/or, more in general, according to the type of the motor vehicle 1, in other parts of the motor vehicle 1, including ones different from the passenger compartment 2.

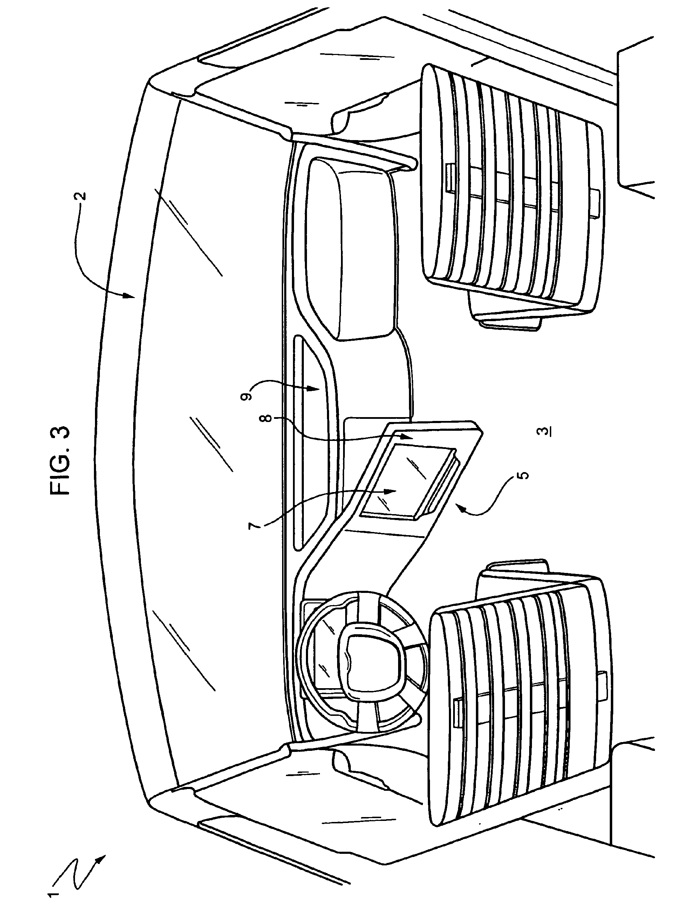

Furthermore, as illustrated in Figures 1 and 3, the support 8 for the control console 7 provided in the driving compartment 3 is designed to cause the control console 7 to be displaceable, manually or automatically in response to a manual command, between a position spaced apart from the driver (shown in Figure 1), in which it is difficultly reachable or altogether inaccessible for the driver when the latter assumes a natural driving position, and a position close to the driver (shown in Figure 3), where it is comfortably reachable by the driver when the latter assumes a natural driving position.

The control console 7 is designed to function both when it is fixed to one of the supports 8 and when it is detached from any of the supports 8 and is hand-held by the user. For this purpose, the control console 7 is equipped with a short-range wireless communication device, for example of a Bluetooth™ or ZigBee™, through which the control console 7 can wirelessly communicate with the infotelematic or infotainment system of the motor vehicle 1, practically as a remote control that can be used by the user both inside the passenger compartment 2 of the motor vehicle 1 and on the outside of this, within the range of communication of the short-range wireless-communication device. Furthermore, when the control console 7 is fixed to one of the supports 8, it is electrically supplied by the electrical system of the motor vehicle 1, whereas when the control console 7 is detached from any of the supports 8, it is electrically supplied by a self-contained rechargeable electrical power source, which is recharged by the electrical system of the motor vehicle 1 when the control console 7 is fixed to one of the supports 8.

Furthermore, the control console 7 is designed to store and execute a software designed to co-operate with the software loaded in the electronic control unit of the infotelematic system to control operation of the control console 7, in particular to display on the control console 7 a series of user-selectable/activatable functions to control operation of on-board electrical/electronic devices and of the control console 7 in response to actions performed by a user on the control console 7 and to receive from the electronic control unit and display information on status and operation of the motor vehicle 1, as described in greater detail hereinafter.

It is emphasized that, for the purposes of the present invention, it is not important which and how many functions are specifically performed by the electronic control unit of the infotelematic system and which and how many are instead performed by the control console 7, but rather only which functions are performed, to the extent that these could even be performed all by one or by the other of the two, according to the software architecture that the manufacturer of the infotelematic or infotainment system of the motor vehicle 1 shall deem convenient to implement. For this reason, then, and also for convenience of description, in the following description reference will be made generically to the functions performed by a management software, without specifying whether these functions are specifically performed by the software loaded in the electronic control unit of the infotelematic system or else by the one loaded in the control console 7.

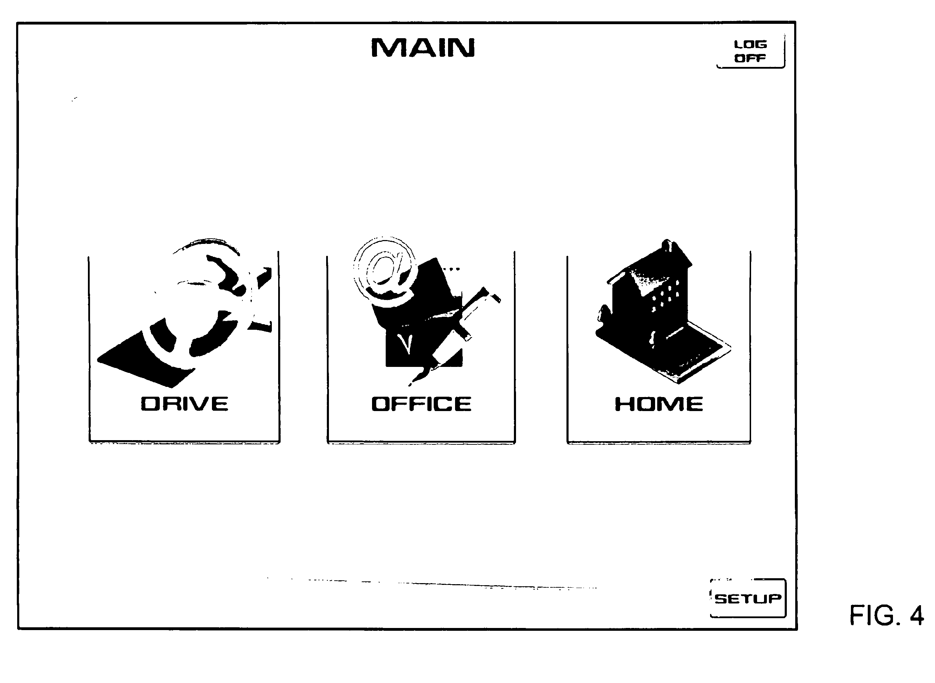

As illustrated in Figure 4, the management software is configured to cause, upon vehicle key-on, a main menu to be displayed on the control console 7, and comprising three main icons representing the following three classes of associated functions:
- "DRIVE": class of functions operatively inherent in, or logically related to, driving of the motor vehicle 1 (hereinafter driving-related functions), described in greater detail hereinafter;
- "OFFICE": class of functions generally inherent in, or logically related to, activities that are typical of a working or professional activity performed locally or in connection with a remote centre, a sorting centre, or a centre for managing fleets of vehicles; and
- "HOME": class of functions generally inherent in, or logically related to, personal activities, of a living, amusement, or relaxation type, such as for example entertainment, possibility of cooking, washing, etc.

The management software is further configured to recognize touch-selections of the three main icons shown in Figure 4 and to cause, in response to a recognized touch-selections, one or more associated secondary menus to be displayed on the control console 7, which secondary menus contain in turn secondary icons and/or graphic symbols representing the functions associated to the main icons.

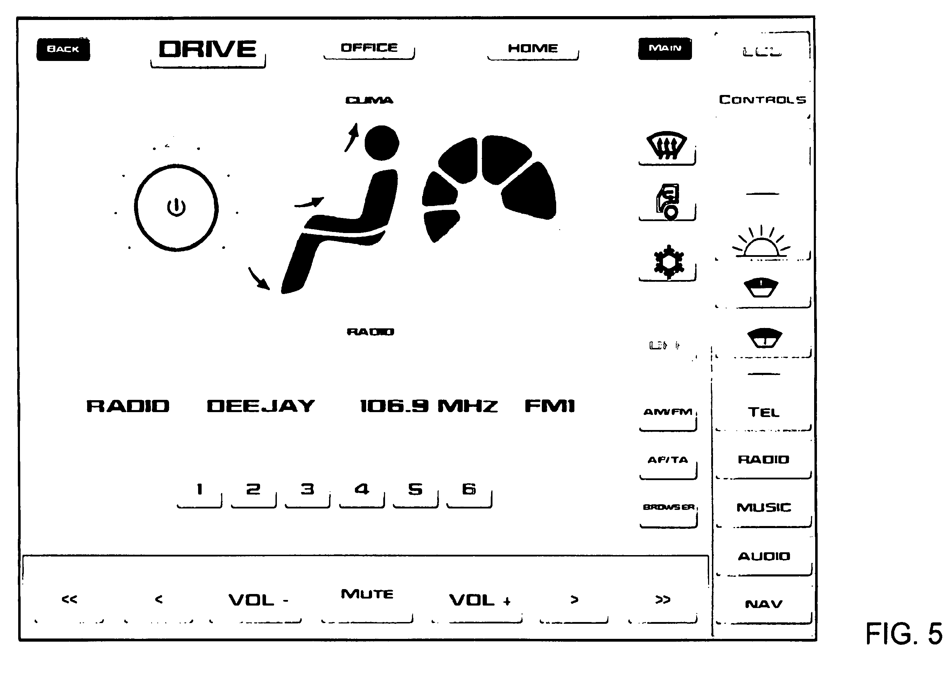

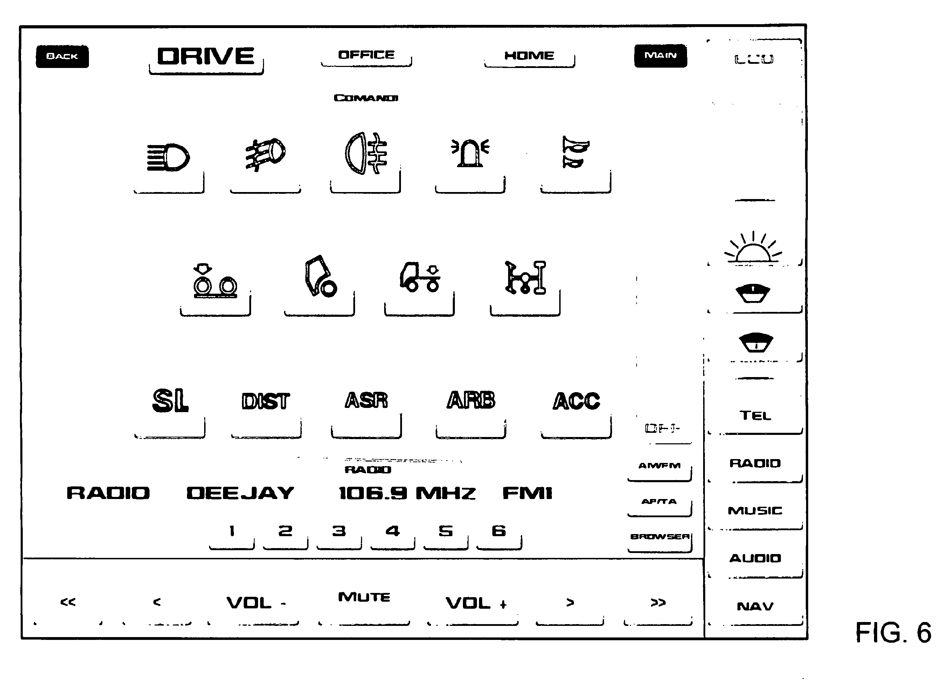

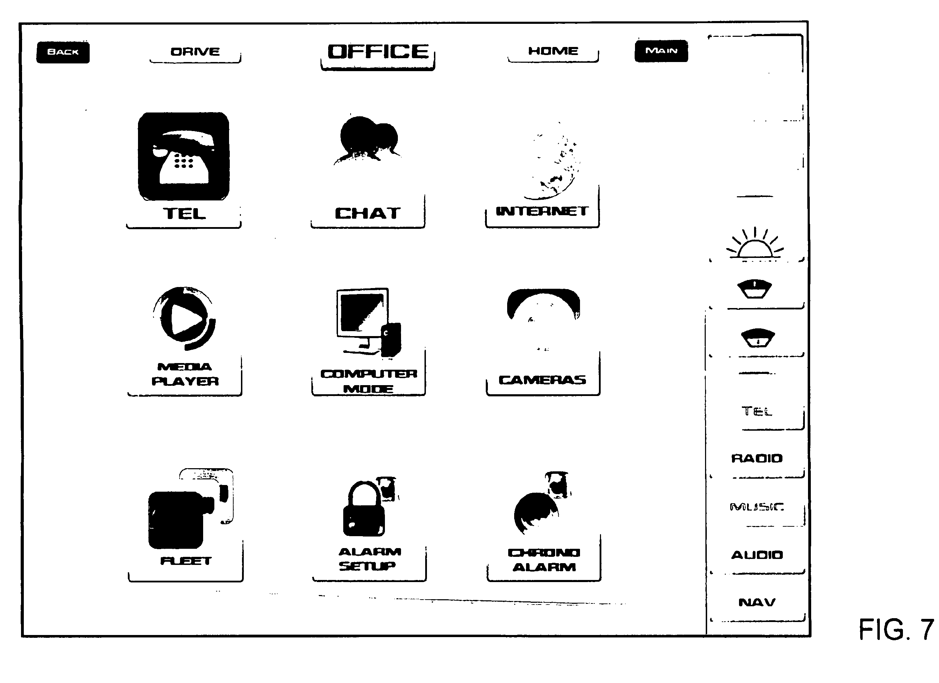

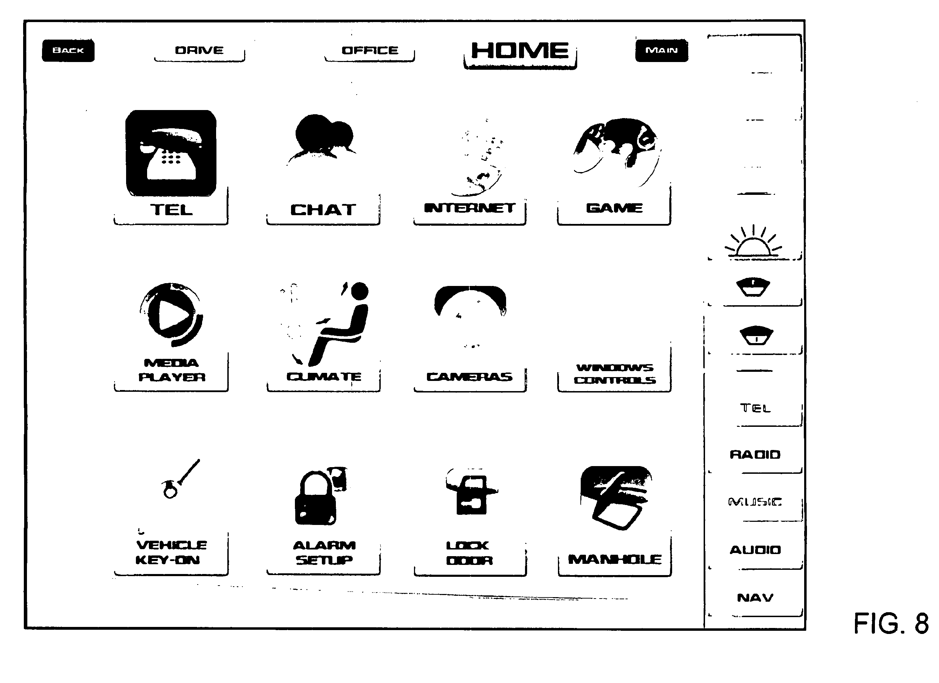

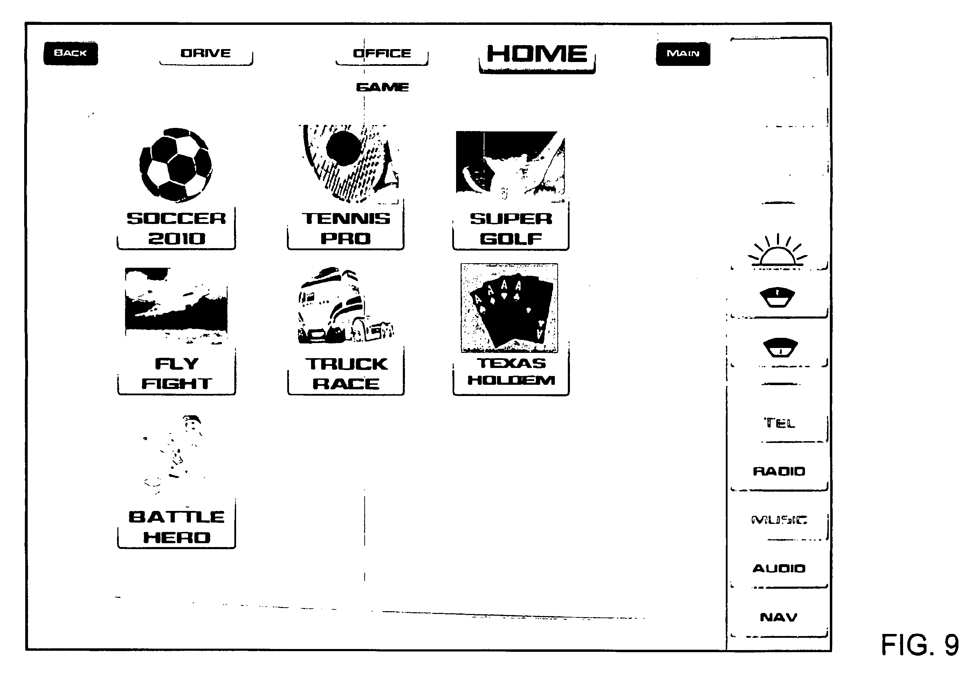

Figures 5-9 show, by way of non-limiting example, secondary menus displayed on the control console 7 in response to the selection of the main icons illustrated in Figure 4. In particular, Figures 5 and 6 show secondary menus displayed in response to the selection of the icon "DRIVE", Figure 7 shows a secondary menu displayed in response to the selection of the icon "OFFICE", and Figures 8 and 9 show secondary menus displayed in response to the selection of the icon "HOME". It is to be noted that the icons, the graphic symbols, and/or the names of the functions represented in Figures 4-9 constitute a simple non-limiting example and may vary according to the functions that the manufacturer wishes to make available to the driver.

As may be noted in Figure 4, upon vehicle key-on", the area of display of the control console 7 is entirely dedicated to the display of the three main icons "DRIVE", "OFFICE", and "HOME" of the main menu. As may, instead, be noted in Figures 5-9, when one of the three main icons is selected and the corresponding secondary menu is then displayed, the area of display of the control console 7 is divided into a main display sector that occupies a large part of the display area of the control console 7 and in which the icons and/or the graphic symbols representing the functions associated to the main icons are displayed, and a secondary display sector in the form of vertical lateral strip, referred to in what follows for reasons of brevity by the term "display sidebar", in which a series of soft buttons are displayed representing particular functions indicated in the soft buttons themselves.

The soft buttons are divided into three groups: the first group, displayed in the top part of the display sidebar, comprises three soft buttons representing fuel saving driving function (ECO), motor vehicle electrical/electronic device control function (CONTROLS) and air-conditioning system regulation function (CLIMA); the second group, displayed in the central part of the display sidebar, comprises three soft buttons representing, respectively, motor vehicle passenger compartment internal lighting and window regulation function; and the third group, displayed in the bottom part of the display sidebar, comprises four soft buttons representing, respectively, a telephone communication function (TEL), a radio listening function (RADIO), music file listening function (MUSIC), sound parameter regulation function (balancing, fader, treble, bass, etc.) (AUDIO), and satellite navigation function (NAV).

As shown in Figure 5, in response to the selection of the icon "DRIVE" in the display area and, subsequently, in the example shown, of the soft button "CLIMA", in the main display regulation there are displayed, in the top part, graphic symbols representing ventilation and air-conditioning system control functions (temperature, distribution and flowrate of the air), whilst, in the bottom part, graphic symbols representing stereo system control functions, such as selection of the frequency band AM/FM, selection of stored radio stations, manual selection of the radio station, adjustment of the volume, mute function, etc., as well as other information such as the name, frequency and frequency band of the radio station selected, etc.

As shown, instead, in Figure 6, in response to the selection of the icon "DRIVE" and, subsequently, in the example shown, of the soft button "CONTROLS", in the main display sector there are displayed, in the top part, icons representing motor vehicle electrical/electronic devices control functions, such as passing-beam lights, driving-beam headlights, front and rear foglights, horn, rotating beacons, four-wheel drive, acceleration-slip regulation (ASR), anti-roll bar (ARB), adaptive cruise control (ACC), SL, DIST, tyre pressure regulating devices, driving cab forward tipping devices, etc., whilst, in the bottom part, graphic symbols representing stereo system control functions described above with reference to Figure 5.

As shown instead in Figure 7, in response to the selection of the icon "OFFICE", in the main display sector there are displayed icons representing functions such as telephone communication, electronic messaging, amongst which electronic mail, connection to the Internet, media player, web camera, vehicle-fleet management, alarm regulation, etc., as well as a computer mode, in which the user can exploit office-suite-like functions that enable creation or use of contents, such as text documents, presentations, graphs, etc.

As shown instead in Figure 8, in response to the selection of the icon "HOME", in the main display sector there are displayed icons representing entertainment-related functions such as telephone communication, electronic messaging, connection to the Internet, media player, videogames, web camera, door locking, roof manhole opening, as well as air-conditioning system adjustment, and vehicle key-on.

Finally, Figure 9 shows icons displayed in the main display sector in response to the selection of the icon regarding videogames shown in Figure 8.

Furthermore, as may be noted in Figures 7 and 8, the three soft buttons displayed in the top part of the display sidebar and representing the fuel saving driving function (ECO), the motor vehicle electrical/electronic device control function (CONTROLS), and the air-conditioning system control function (CLIMA), as well as two of the buttons displayed in the bottom part of the display sidebar and representing the telephone communication function (TEL) and the music file listening function (MUSIC) are functionally disabled and are displayed consequently, in the example illustrated, faded in so far as the corresponding displays are already active and the icons and/or the graphic symbols representing said functions are already displayed in the main display sector.

This display mode represents a characteristic common to all the menus, so that if a certain function is displayed both in the display sidebar, via an associated soft button, and in the main display sector, via an associated icon and/or graphic symbol, the corresponding soft button in the display sidebar is functionally disabled and displayed accordingly. The reason for this is that the soft buttons of the sidebar serve in general as fast and direct access to the functions that through these buttons can be recalled and the corresponding displays in the main display sector can be activated. In the case where these functions have already been recalled or activated, the corresponding soft buttons in the sidebar are deactivated and are displayed in the aforesaid faded mode.

Touch selection of an icon, graphic symbol, or soft button displayed in the main display sector or in the display sidebar causes an associated sub-menu to be displayed, when so provided, or otherwise an associated function to be activated.

To return to the functions performed by the management software, the latter is designed to perform control functions aimed at guaranteeing a use of the control console 7 in full respect of safety travel criteria for the motor vehicle 1.

One of these control functions regards the use of the control console 7 when this is fixed to the support 8 provided in the driving compartment 3 of the passenger compartment 2 of the motor vehicle 1. In fact, as has previously been said, when the control console 7 is fixed to the support 8 provided in the driving compartment 3, the management software is designed to recognize, through a purposely designed sensor system, known per se and hence not described in detail, the operative position of the control console 7 and to cause cranking of the internal combustion engine of the motor vehicle 1 to be disabled as long as the control console 7 is in the position spaced apart from the driver. In fact, as has been said, when the control console 7 is in the position spaced apart from the driver, it is difficultly reachable by the latter; in fact, if it were freely usable also when it is in this position, it could induce the driver to shift significantly from the normal driving position, and this could result in a significant distraction of the driver from the primary task of driving, with possible negative consequences on the driving safety. Consequently, as long as the control console 7 is not moved into the position close to the driver, cranking of the internal combustion engine of the motor vehicle 1 is disabled, thus in effect preventing motion of the motor vehicle 1.

Another control function performed by the management software regards the use that a user can make of the control console 7 depending on where the latter is arranged inside the passenger compartment 2 of the motor vehicle 1, and in particular the automatic reconfiguration of access to the user-selectable functions displayed on the control console 7 depending on whether the control console 7 is fixed or otherwise to one of the supports 8 provided inside the passenger compartment 2 of the motor vehicle 1 and, in the case where it is fixed to one of these supports, depending on the specific support 8 to which the control console 7 is fixed.

In particular, the management software is designed to recognize, through a purposely designed sensor system, known per se and hence not described in detail, whether the control console 7 is or is not fixed to one of the supports 8 provided inside the passenger compartment 2 of the motor vehicle 1 and, in the case where it is fixed to one of said supports, to which support 8 the control console 7 is specifically fixed. The management software is moreover designed to automatically reconfigure access to the user-selectable functions depending on whether the control console 7 is or is not fixed to one of the supports 8 and, in the case where it is fixed to one of these, to which support 8 the control console 7 is specifically fixed.

In particular, when the control console 7 is fixed to the support 8 provided in the driving compartment 3 of the passenger compartment 2 of the motor vehicle 1, then the management software is designed to disable selection of the icons "OFFICE" and "HOME" and enable only selection of the icon "DRIVE" in the main menu, obviously only when, as has previously been said, the control console 7 assumes the position close to the driver, thus enabling the driver to access only functions operatively inherent in, or logically related to, driving of the motor vehicle 1 illustrated in Figures 5 and 6. This limitation of the functions that a user can access when the control console 7 is fixed to the support 8 provided in the driving compartment 3 is dictated by the desire to prevent the driver from possibly accessing functions that can distract him/her from the primary task of driving, such as access to the Internet, electronic messaging, reproduction of video contents, etc., so jeopardizing driving safety.

Instead, in the case where the control console 8 is fixed to the support 8 provided in the lodging or accommodation compartment 4 of the passenger compartment 2 of the motor vehicle 1, or else is not fixed to any of the supports 8 but simply hand-held by a user, then the management software is designed to disable the selection of the icon "DRIVE" in the main menu and enable only the selection of the icons "OFFICE" and "HOME", thus enabling a user to access only functions not inherent in, or logically related to, the driving of the motor vehicle 1. This limitation of the functions to which a user can gain access when the control console 7 is not fixed to the support 8 provided in the driving compartment 3 of the passenger compartment 2 of the motor vehicle 1 or else is not fixed to any of the supports 8 but simply hand-held by a user, is dictated by the fact that this configuration/positioning of the control console 7 is indicative of the fact that the driver is certainly not driving the motor vehicle 1 (otherwise, the control console 7 would be necessarily fixed to the support 8 provided in the driving compartment 3 for enabling motion of the motor vehicle 1), the aim being to prevent the driver from possibly accessing functions regarding driving that might in some way reflect negatively on the stationary state of the motor vehicle 1 and possibly jeopardize the safety of the occupants of the motor vehicle 1.

However, to meet the need to warm up the passenger compartment 2 and the internal combustion engine of the motor vehicle 1 prior to starting of the motor vehicle 1 even when the control console 7 is not fixed to the support 8 provided in the driving compartment 3 or is simply hand-held by a user, amongst the functions associated to the main icon "HOME" there is the vehicle key-on function, selection of which enables electrical supply, and hence running, of a conditioning system of the type operating in the presence of just electrical supply, i.e., without the need for the internal combustion engine of the motor vehicle 1 being cranked. In the case, instead, where the conditioning system of the motor vehicle 1 is of the type operated by the internal combustion engine, among the functions associated to the main icon "HOME" there is that of cranking of the internal combustion engine of the motor vehicle, selection of which causes cranking of the internal combustion engine on the condition, however, that the driving wheels are mechanically decoupled from the internal combustion engine (gear change in neutral or clutch disengaged) and the parking brake is operated.

Consequently, for this reason, the management software is designed to verifying whether these two conditions arise and, in the case where they do, to cause cranking of the internal combustion engine in response to selection of this function. In the case, instead, where these two conditions were not verified but the motor vehicle 1 is equipped with a servo transmission and a servo parking brake, the management software is designed to cause the transmission and the parking brake to assume the conditions referred to above and only subsequently cause cranking of the internal combustion engine.

Finally, it is clear that modifications and variations may be made to the automotive human machine interface described and shown herein, without thereby departing from the scope of protection of the present invention, as defined by the appended claims.

In particular, as has been initially said, the various characteristics of the automotive human machine interface described above could be adopted also for producing interfaces for types of vehicles different from the one to which reference has so far been made, and in particular for machines with multiple operating modes, i.e., machines that are able to carry out different types of work, for example machines that are able to operate both as agricultural machinery and as earth-moving machinery. In this particular type of motor vehicles, the different types of work are normally performed by different on-board control places or else by one and the same control place but in different working positions or configurations, for example opposite working positions with respect to the vehicle. Consequently, the automotive human machine interface will comprise a support 8 for each control place/position/configuration, and a control console 7 on which there will be displayed, upon vehicle key-on, a main menu that will comprise, in addition to the icons "OFFICE" and "HOME" described above, different icons similar to the one "DRIVE" described above, one for each of the different types of work that the machine is able to perform, and to each of which there are associated functions operatively inherent in, or logically related to, the corresponding type of work. When the control console 7 is fixed to a given support 8, only the icon regarding the type of work that can be performed by the machine in/by the driving place/position/configuration associated to the support 8 to which the control console 7 is fixed can be selected, whereas selection of the icons associated to the other types of work that can be performed by the machine in/by the other driving places/positions/configurations will be disabled.

Furthermore, the control console 7 could be of a type different from the one described, and in particular might not be of the touch-sensitive type but rather be provided with appropriate function selection/activation keys.

## Claims

1. An automotive human machine interface (5) comprising:
- a control console (7) with a display unit;
- a plurality of communication interfaces (8) designed to allow the control console (7) to communicate; wherein a first one of the communication interfaces (8) is defined by a support (8) to which the control console (7) can be removably fixed, and a second one of the communication interfaces (8) is defined by either a further support (8) to which the control console (7) can be removably fixed or a wireless communication system which allows the control console (7) to communicate when it is detached from any of the supports (8) ; the supports (8) being configured to enable the support (8) to which the control console (7) is fixed to be recognized; and
- an electronic managing unit configured to manage operation of the control console (7) and to cause user-selectable functions to be displayed on the control console (7);
wherein the electronic managing unit is further configured to automatically reconfigure access of a user to the user-selectable functions depending on the communication interface (8) through which the control console (7) communicates.

2. The automotive human machine interface (5) according to Claim 1, wherein the control console (7) is configured to operate also when it is detached from any of the supports (8), and wherein the electronic managing unit is further configured to automatically reconfigure access of a user to the user-selectable functions depending on whether the control console (7) is fixed to or detached from the supports (8).

3. The automotive human machine interface (5) according to Claim 1 or 2, wherein the user-selectable functions comprise:
• a first group of user-selectable functions (DRIVE) operatively inherent in, or logically related to, an operating mode of a vehicle (1) on which the automotive human machine interface (5) is provided;
and one or more from among:
• a second group of user-selectable functions (DRIVE) operatively inherent in, or logically related to, a further, different operating mode of the vehicle (1);
• a third group of user-selectable functions (OFFICE) generally inherent in, or logically related to, working or professional activities; and
• a fourth group of user-selectable functions (HOME) generally inherent in, or logically related to, personal, living, amusement, or relaxation activities;
and wherein the electronic managing unit is further configured to selectively disable access of a user to one or more of said groups of user-selectable functions depending on whether the control console (7) is fixed to or detached from the supports (8) and/or depending on the support (8) to which the control console (7) is fixed.

4. The automotive human machine interface (5) according to Claim 3, for a vehicle (2) comprising a passenger compartment (1) provided with a driving/control compartment (3);
wherein one of the supports (8) for the control console (7) is provided in the driving/control compartment (3);
and wherein the electronic managing unit is further configured to enable access of a user to one of the first and second groups of user-selectable functions and to disable access of the user to the other groups of user-selectable functions when the control console (7) is fixed to the support (8) in the driving/control compartment (3).

5. The automotive human machine interface (5) according to Claim 4, wherein the support (8) for the control console (7) in the driving/control compartment (3) is designed to cause the control console (7) to be displaceable between a position spaced apart from the driver/operator, in which it is difficultly reachable or inaccessible for the driver/operator when the latter assumes a natural driving/working position, and a position close to the driver/operator, where it is comfortably reachable by the driver/operator when the latter assumes a natural driving/working position;
and wherein the electronic managing unit is further configured to enable access of a user to one of the first and second groups of user-selectable functions when the control console (7) is fixed to the support (8) in the driving/control compartment (3) and assumes the position close to the driver/operator.

6. The automotive human machine interface (5) according to Claim 4 or 5, for a vehicle (1) comprising a passenger compartment (2) further provided with a lodging or accommodation compartment (4) distinct from the driving/control compartment (3);
wherein one of the supports (8) for the control console (7) is provided in the lodging or accommodation compartment (4);
and wherein the electronic managing unit is further configured to disable access of a user to the first and, if envisaged, to the second group of user-selectable functions and to enable access of a user to the third and fourth groups of user-selectable functions when the control console (7) is fixed to the support (8) in the lodging or accommodation compartment (4) or is not fixed to any of the supports (8).

7. The automotive human machine interface (5) according to Claim 6, wherein one of the third and fourth groups of user-selectable functions comprises one of a vehicle key-on function and a vehicle internal combustion engine cranking function;
and wherein the electronic managing unit is further configured to cause cranking of the internal combustion engine of the vehicle in response to selection of the vehicle internal combustion engine cranking function on condition that the vehicle driving wheels are mechanically decoupled from the internal combustion engine and the vehicle parking brake is operated.

8. A vehicle infotelematic/infotainment system comprising an automotive human machine interface (5) according to any one of the preceding claims.

9. A vehicle comprising an automotive human machine interface (5) according to any one of the preceding claims.

10. A software for an automotive human machine interface (5), designed to cause, when run, the automotive human machine interface (5) to become configured as claimed in any one of Claims 1 to 7.

## Patentansprüche

1. Mensch-Maschinen-Automobilschnittstelle (5) mit:
- einer Steuerkonsole (7) mit einer Anzeigeeinheit;
- einer Mehrzahl an Kommunikationsschnittstellen (8), die dazu gestaltet sind, der Steuerkonsole (7) ein Kommunizieren zu ermöglichen; wobei eine erste von den Kommunikationsschnittstellen (8) durch eine Stützung (8) definiert ist, an welcher die Steuerkonsole (7) lösbar befestigbar ist, und wobei eine zweite der Kommunikationsschnittstellen (8) durch entweder eine weitere Stützung (8), an welcher die Steuerkonsole (7) lösbar befestigbar ist, oder durch ein drahtloses Kommunikationssystem definiert ist, welches der Steuerkonsole (7) zu kommunizieren ermöglicht, wenn es von einer der Stützungen (8) gelöst ist; wobei die Stützungen (8) dazu eingerichtet sind, ein Erkennen der Stützung (8), an welche die Steuerkonsole (7) befestigt ist, zu ermöglichen; und
- einer elektronischen Verwaltungseinheit, die dazu eingerichtet ist, einen Betrieb der Steuerkonsole (7) zu verwalten und zu bewirken, dass vom Benutzer auswählbare Funktionen an der Steuerkonsole (7) angezeigt werden;
wobei die elektronische Verwaltungseinheit außerdem dazu eingerichtet ist, einen Zugriff von einem Benutzer auf die benutzerauswählbaren Funktionen abhängig von der Kommunikationsschnittstelle (8), durch welche die Steuerkonsole (7) kommuniziert, automatisch zu rekonfigurieren.

2. Mensch-Maschinen-Automobilschnittstelle (5) nach Anspruch 1,
wobei die Steuerkonsole (7) zum Betrieb eingerichtet ist, auch wenn sie von einer der Stützungen (8) gelöst ist, und
die elektronische Verwaltungseinheit außerdem dazu eingerichtet ist, einen Zugriff von einem Benutzer auf die benutzerauswählbaren Funktionen abhängig davon automatisch zu rekonfigurieren, ob die Steuerkonsole (7) mit den Stützungen (8) verbunden oder von diesen gelöst ist.

3. Mensch-Maschinen-Automobilschnittstelle (5) nach Anspruch 1 oder 2, wobei die benutzerauswählbaren Funktionen aufweisen:
o eine erste Gruppe von benutzerauswählbaren Funktionen (FAHREN), welche einem Betriebsmodus von einem Fahrzeug 1, an welchem die Mensch-Maschinen-Automobilschnittstelle (5) vorgesehen ist, operativ zugehörig oder mit diesem logisch verbunden sind;
und eine oder mehrere von den folgenden:
o eine zweite Gruppe von benutzerauswählbaren Funktionen (FAHREN), die einem weiteren anderen Betriebsmodus des Fahrzeugs 1 operativ zugehörig oder logisch mit diesem verbunden sind;
o eine dritte Gruppe von benutzerauswählbaren Funktionen (BÜRO), die arbeits- oder professionellen Aktivitäten im Wesentlichen zugehörig oder logisch mit diesen verbunden sind;
o eine vierte Gruppe von benutzerauswählbaren Funktionen (HEIM), die persönlichen, Wohn-, Vergnügungs- oder Entspannungsaktivitäten im Wesentlichen zugehörig oder logisch mit diesen verbunden sind;
und wobei die elektronische Verwaltungseinheit außerdem dazu eingerichtet ist, einen Zugriff von einem Benutzer auf eine oder mehrere der Gruppen von benutzerauswählbaren Funktionen selektiv zu sperren, abhängig davon, ob die Steuerkonsole (7) an die Stützungen (8) befestigt oder von diesen gelöst ist, und/oder abhängig von der Stützung (8), an welche die Steuerkonsole (7) befestigt ist.

4. Mensch-Maschinen-Automobilschnittstelle (5) nach Anspruch 3,
für ein Fahrzeug (2) mit einem Passagierabschnitt (1), welcher mit einem Fahr-/Steuerabschnitt (3) versehen ist,
wobei eine der Stützungen (8) für die Steuerkonsole (7) in dem Fahr-/Steuerabschnitt (3) vorgesehen ist;
und wobei die elektronische Verwaltungseinheit außerdem dazu eingerichtet ist, einen Zugriff eines Benutzers auf eine von der ersten und der zweiten Gruppe von benutzerauswählbaren Funktionen zu ermöglichen und einen Zugriff des Benutzers auf andere Gruppen von benutzerauswählbaren Funktionen zu sperren, wenn die Steuerkonsole (7) an der Stützung (8) in dem Fahr-/Steuerabschnitt (3) befestigt ist.

5. Mensch-Maschinen-Automobilschnittstelle (5) nach Anspruch 4,
wobei die Stützung (8) für die Steuerkonsole (7) in dem Fahr-/Steuerabschnitt (3) dazu gestaltet ist zu bewirken, dass die Steuerkonsole (7) verstellbar ist zwischen einer von dem Fahrer/Betreiber beabstandeten Position, in welcher sie schwer erreichbar oder unzugänglich für den Fahrer/Betreiber ist, wenn der letztere eine natürliche Fahr-/Arbeitsposition einnimmt, und einer Position nahe zu dem Fahrer/Betreiber, von wo sie von dem Fahrer/Betreiber leicht erreichbar ist, wenn der letztere eine natürliche Fahr-/Arbeitsposition einnimmt;
und wobei die elektronische Verwaltungseinheit außerdem dazu eingerichtet ist, einen Zugriff eines Benutzers auf eine der ersten und der zweiten Gruppe von benutzerauswählbaren Funktionen zu erlauben, wenn die Steuerkonsole (7) an die Stützung (8) in dem Fahr-/Steuerabschnitt (3) befestigt ist und die Position nahe zu dem Fahrer/Betreiber einnimmt.

6. Mensch-Maschinen-Automobilschnittstelle (5) nach Anspruch 4 oder 5 für ein Fahrzeug (1) mit einem Passagierabschnitt (2), bei dem außerdem ein Wohn - oder Unterbringungsabschnitt (4) vorgesehen ist, welcher verschieden von dem Fahr-/Steuerabschnitt (3) ist;
wobei eine der Stützungen (8) für die Steuerkonsole (7) in dem Wohn- oder Unterbringungsabschnitt (4) vorgesehen ist;
und wobei die elektronische Verwaltungseinheit außerdem dazu eingerichtet ist, einen Zugriff von einem Benutzer auf die erste und, wenn beabsichtigt, auf die zweite Gruppe von benutzerauswählbaren Funktionen zu sperren und einen Zugriff von einem Benutzer auf die dritte und die vierte Gruppe von benutzerauswählbaren Funktionen zu erlauben, wenn die Steuerkonsole (7) an der Stützung (8) in dem Wohn- oder Unterbringungsabschnitt (4) befestigt ist oder nicht an irgend einer der Stützungen (8) befestigt ist.

7. Mensch-Maschinen-Automobilschnittstelle (5) nach Anspruch 6,
wobei eine von der dritten und der vierten Gruppe von benutzerauswählbaren Funktionen eine von einer Fahrzeugschlüsseleinschaltfunktion und einer Anlassfunktion für den Verbrennungsmotor des Fahrzeugs aufweist;
und wobei die elektronische Verwaltungseinheit außerdem dazu eingerichtet ist, ein Anlassen des Verbrennungsmotors des Fahrzeugs als Folge einer Auswahl der Anlassfunktion für den Verbrennungsmotor des Fahrzeugs zu bewirken, unter der Bedingung, dass die Fahrzeugantriebsräder mechanisch entkoppelt von dem Verbrennungsmotor sind und die Handbremse des Fahrzeugs betätigt ist.

8. Infotelematisches 1 Infotainment-Fahrzeugsystem mit einer Mensch-Maschinen-Automobilschnittstelle (5) nach einem der vorausgehenden Ansprüche.

9. Fahrzeug mit einer Mensch-Maschinen-Automobilschnittstelle (5) nach einem der vorausgehenden Ansprüche.

10. Computerprogramm für eine Mensch-Maschinen-Automobilschnittstelle (5), das dazu gestaltet ist, bei Ausführung zu bewirken, dass die Mensch-Maschinen-Automobilschnittstelle (5) wie in einem der Ansprüche 1 bis 7 beansprucht eingerichtet wird.

## Revendications

1. Interface homme-machine d'automobile (5) comprenant .
- une console de commande (7) avec une unité d'affichage ;
- une pluralité d'interfaces de communication (8) conçues pour permettre à la console de commande (7) de communiquer ; dans laquelle une première des interfaces de communication (8) est définie par un support (8) auquel la console de commande (7) peut être fixée de manière amovible, et une deuxième des interfaces de communication (8) est définie soit par un support (8) supplémentaire auquel la console de commande (7) peut être fixée de manière amovible, soit par un système de communication sans fil qui permet à la console de commande (7) de communiquer lorsqu'elle est détachée de l'un quelconque des supports (8) ; les supports (8) étant configurés pour permettre que le support (8) auquel la console de commande (7) est fixée soit reconnu ; et
- une unité de gestion électronique configurée pour gérer le fonctionnement de la console de commande (7) et pour faire en sorte que des fonctions pouvant être sélectionnées par l'utilisateur soient affichées sur la console de commande (7) ;
dans laquelle l'unité de gestion électronique est en outre configurée pour reconfigurer automatiquement l'accès d'un utilisateur aux fonctions pouvant être sélectionnés par l'utilisateur en fonction de l'interface de communication (8) par l'intermédiaire de laquelle la console de commande (7) communique.

2. Interface homme-machine d'automobile (5) selon la revendication 1, dans laquelle la console de commande (7) est configurée pour fonctionner également lorsqu'elle est détachée de l'un quelconque des supports (8), et dans laquelle l'unité de gestion électronique est en outre configurée pour reconfigurer automatiquement l'accès d'un utilisateur aux fonctions pouvant être sélectionnées par l'utilisateur selon que la console de commande (7) est fixée aux supports (8) ou détachée de ceux-ci.

3. Interface homme-machine d'automobile (5) selon la revendication 1 ou 2, dans laquelle les fonctions pouvant être sélectionnées par l'utilisateur comprennent :
• un premier groupe de fonctions pouvant être sélectionnées par l'utilisateur (DRIVE) inhérentes fonctionnellement dans, ou liées logiquement à, un mode de fonctionnement d'un véhicule (1) sur lequel l'interface homme-machine d'automobile (5) est prévue ;
et un ou plusieurs parmi :
• un deuxième groupe de fonctions pouvant être sélectionnées par l'utilisateur (DRIVE) inhérentes fonctionnellement dans, ou liées logiquement à, un autre mode de fonctionnement différent du véhicule (1) ;
• un troisième groupe de fonctions pouvant être sélectionnées par l'utilisateur (OFFICE) généralement inhérentes dans, ou liées logiquement à, des activités de travail ou professionnelles ; et
• un quatrième groupe de fonctions pouvant être sélectionnées par l'utilisateur (HOME) généralement inhérentes dans, ou liées logiquement à, des activités personnelles, de vie, de distraction, ou de relaxation ;
et dans laquelle l'unité de gestion électronique est en outre configurée pour interdire de manière sélective l'accès d'un utilisateur à un ou plusieurs desdits groupes de fonctions pouvant être sélectionnées par l'utilisateur selon que la console de commande (7) est fixée aux supports (8) ou détachée de ceux-ci et/ou en fonction du support (8) auquel la console de commande (7) est fixée.

4. Interface homme-machine d'automobile (5) selon la revendication 3, pour un véhicule (2) comprenant un habitacle (1) pourvu d'un compartiment de conduite/commande (3) ;
dans laquelle l'un des supports (8) pour la console de commande (7) est prévu dans le compartiment de conduite/commande (3) ;
et dans laquelle l'unité de gestion électronique est en outre configurée pour permettre l'accès d'un utilisateur à l'un des premier et deuxième groupes de fonctions pouvant être sélectionnées par l'utilisateur et pour interdire l'accès de l'utilisateur aux autres groupes de fonctions pouvant être sélectionnées par l'utilisateur lorsque la console de commande (7) est fixée au support (8) dans le compartiment de conduite/commande (3).

5. Interface homme-machine d'automobile (5) selon la revendication 4, dans laquelle le support (8) pour la console de commande (7) dans le compartiment de conduite/commande (3) est conçu pour faire en sorte que la console de commande (7) puisse être déplacée entre une position espacée du conducteur/opérateur, à laquelle elle est difficile à atteindre ou inaccessible pour le conducteur/opérateur lorsque ce dernier adopte une position de conduite/travail naturelle, et une position proche du conducteur/opérateur, où elle peut être atteinte confortablement par le conducteur/opérateur lorsque ce dernier adopte une position de conduite/travail naturelle ;
et dans laquelle l'unité de gestion électronique est en outre configurée pour permettre l'accès d'un utilisateur à l'un des premier et deuxième groupes de fonctions pouvant être sélectionnées par l'utilisateur lorsque la console de commande (7) est fixée au support (8) dans le compartiment de conduite/commande (3) et qu'elle adopte la position proche du conducteur/opérateur.

6. Interface homme-machine d'automobile (5) selon la revendication 4 ou 5, pour un véhicule (1) comprenant un habitacle (2) pourvu en outre d'un compartiment d'hébergement ou de logement (4) distinct du compartiment de conduite/commande (3) ;
dans laquelle l'un des supports (8) pour la console de commande (7) est prévu dans le compartiment d'hébergement ou de logement (4) ;
et dans laquelle l'unité de gestion électronique est en outre configurée pour interdire l'accès d'un utilisateur au premier et, s'il est envisagé, au deuxième groupe de fonctions pouvant être sélectionnées par l'utilisateur et pour permettre l'accès d'un utilisateur aux troisième et quatrième groupes de fonctions pouvant être sélectionnées par l'utilisateur lorsque la console de commande (7) est fixée au support (8) dans le compartiment d'hébergement ou de logement (4) ou n'est pas fixée à l'un quelconque des supports (8).

7. Interface homme-machine d'automobile (5) selon la revendication 6, dans laquelle l'un des troisième et quatrième groupes de fonctions pouvant être sélectionnées par l'utilisateur comprend l'une d'une fonction de contact mis de véhicule et d'une fonction de démarrage de moteur à combustion interne de véhicule ;
et dans laquelle l'unité de gestion électronique est en outre configurée pour provoquer le démarrage du moteur à combustion interne du véhicule en réponse à la sélection de la fonction de démarrage de moteur à combustion interne de véhicule à la condition que les roues motrices du véhicule soient découplées mécaniquement du moteur à combustion interne et que le frein de stationnement du véhicule soit actionné.

8. Système infotélématique/infoloisirs de véhicule comprenant une interface homme-machine d'automobile (5) selon l'une quelconque des revendications précédentes.

9. Véhicule comprenant une interface homme-machine d'automobile (5) selon l'une quelconque des revendications précédentes.

10. Logiciel pour une interface homme-machine d'automobile (5), conçu pour faire en sorte que, lorsqu'il est exécuté, l'interface homme-machine d'automobile (5) soit configurée selon l'une quelconque des revendications 1 à 7.
